(19) **Europäisches Patentamt**
**European Patent Office**
**Office européen des brevets**

(11) **EP 2 149 857 A1**

(12) **EUROPEAN PATENT APPLICATION**

(43) Date of publication:
**03.02.2010 Bulletin 2010/05**

(51) Int Cl.:
***G06K 9/62*** *(2006.01)*     ***G01S 13/72*** *(2006.01)*

(21) Application number: **08252580.9**

(22) Date of filing: **30.07.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **BAE Systems plc**<br>**London SW1Y 5AD (GB)** | (72) Inventor: **The designation of the inventor has not yet been filed**<br><br>(74) Representative: **Mukherjee, Aniruddha et al**<br>**BAE Systems plc**<br>**Group IP Department**<br>**Lancaster House**<br>**P.O. Box 87**<br>**Farnborough Aerospace Centre**<br>**Farnborough, Hampshire GU14 6YU (GB)** |

(54) **Estimating states of a plurality of targets tracked by a plurality of sensors**

(57)    A method of estimating states of a plurality of targets tracked by a plurality of sensors. The method includes obtaining (202) a plurality of data sets based on measurements taken by a plurality of sensors, each said data set including information on states of a plurality of targets. The method then generates (204) a plurality of target correlation data sets describing correlation of the targets within a first said data set and at least one other said data set. A Generalised Covariance Union (GCU) technique is used to merge (206) at least some of the plurality of target correlation data sets to generate an estimate of the states of the plurality of targets.

Obtain data set based on target state measurements taken by a local sensor and at least one data set based on target state measurements taken by at least one remote sensor

202

↓

Generate target correlation data sets describing correlation of the targets between one of the data sets and other data sets

204

↓

Use Generalised Covariance Union technique to merge target correlation data sets to generate an estimate of the states of the plurality of targets

206

FIG. 2

EP 2 149 857 A1

**Description**

The present invention relates to estimating states of a plurality of targets tracked by a plurality of sensors.

Sensors are widely used for monitoring and surveillance applications and often track moving targets. A known sensing technique that involves multiple sensors is a distributed sensor fusion network. The sensors in the network operate a Decentralised Data Fusion (DDF) algorithm (DDF is described in J. Manyika and H.F. Durrant-Whyte, Data Fusion and Sensor Management: A Decentralised Information-Theoretic Approach, Ellis Horwood, 1994), where data based on measurements taken by each sensor in the network are transmitted to the other sensors. Each sensor then performs a fusing operation on the data it has received from the other sensors as well as data based on its own measurements in order to predict the states (typically locations and velocities) of the targets.

A problem associated with distributed sensor fusion networks is the effects of a corrupt or spurious estimate of a target state. A corrupt estimate may arise due to incorrect calibration, interference, etc, and can corrupt all estimates with which it is fused, which, in turn, can lead to the corruption of every estimate which is subsequently fused with that. Information in the network can thus become corrupted at a geometric rate. It is therefore desirable to eliminate or reduce this problem without adversely affecting the quality of the fused picture/state estimates. Moreover, it is preferred that a proposed solution can fit into an existing DDF framework without compromising its scalability and flexibility benefits.

According to one aspect of the present invention there is provided a method of estimating states of a plurality of targets tracked by a plurality of sensors, the method including:

obtaining a plurality of data sets based on measurements taken by a plurality of sensors, each said data set including information on states of a plurality of targets;

generating a plurality of target correlation data sets describing correlation of the targets within a first said data set and at least one other said data set, and

using a Generalised Covariance Union (GCU) technique to merge at least some of the plurality of target correlation data sets to generate an estimate of the states of the plurality of targets.

The step of obtaining a plurality of data sets may include obtaining a first data set based on target state measurements taken by a local sensor and at least one data set based on target state measurements taken by at least one remote sensor. The method may include obtaining a value denoting a reliability of the target state information within a said data set.

The correlation data sets may be generated using a "soft" hypothesis technique. The hypothesis technique may comprise Murty algorithm or multi-hypothesis tracker algorithm. The correlation data sets may include a representation of a probability of a target tracked within a first said data set (e.g. a local sensor) corresponding to a target tracked within a second said data set (e.g. a remote sensor).

The method may further include performing a GCU algorithm with arguments based on a fusion of the first data set and the second data set, the first data set, the second data set, and associated reliability values for each said argument. The fusion of the first data set and the second data set may be based on an algorithm selected from a set including: Kalman Filter, Conservative Filter, Optimal Information Filter (e.g. as described in S.J. Julier and J.K. Uhlmann, Generalised Decentralised Data Fusion with Covariance Intersection (CI). In D. Hall and J. Llinas, editors, Handbook of Data Fusion, Chapter 13, CRC Press, Boca Raton FL, USA, 2001). The step of using a Generalised Covariance Union technique to merge said plurality of target correlation data sets to generate an estimate of the states of the plurality of targets may include performing a GCU algorithm with arguments based on a result of the performance of the GCU algorithm on the fusion of the first data set and the second data set, the first data set and the second data set.

The method may further include using the estimated targets states to update target state estimates in a DDF algorithm.

The method may further comprise transferring the generated estimate to at least one other processor configured to use the estimate to generate a further target state estimate. The at least one other processor may execute a Decentralised Data Fusion technique.

The correlation data may comprise a plurality of pairings of said data sets, and the step of using the GCU technique may comprise:

performing a fusion operation on each said pairing, and

applying a GCU algorithm to inputs comprising a result of each said fusion operation and corresponding said data sets in each said pairing.

The method may further include applying a further GCU algorithm to inputs comprising outputs of the firstmentioned GCU algorithm to produce a single estimate.

According to another aspect of the present invention there is provided a sensor configured to estimate states of a plurality of targets tracked by a plurality of sensors, the sensor including:

an input device configured to obtain a plurality of data sets based on measurements taken by a plurality of sensors, each said data set including information on states of a plurality of targets;

a data correlation device for generating a plurality of target correlation data sets describing correlation of the targets within a first said data set and at least one other said data set, and

a merging device that uses a Generalised Covariance Union technique to merge said plurality of target correlation data sets to generate an estimate of the states of the plurality of targets.

According to another aspect of the present invention there is provided a computer program product comprising computer readable medium, having thereon computer program code means, when the program code is loaded, to make the computer execute a method of estimating states of a plurality of targets tracked by a plurality of sensors substantially as described herein.

According to yet another aspect of the present invention there is provided a plurality of sensors substantially as described herein, each sensor being configured to communicate information that it obtains regarding the state of the one target to at least one other said sensor.

According to a further aspect of the present invention there is provided a method of estimating states of a plurality of targets tracked by a plurality of sensors wherein a DDF process uses GCU to combine multiple mean/ covariance estimates. There can also be provided a DDF network configured accordingly.

According to another aspect of the present invention there is provided a network of sensor nodes, wherein at least one of the sensor nodes configured to execute a method substantially as described herein. Other said sensor nodes may be configured to execute a conventional DDF algorithm.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:

Figure 1 is a schematic diagram of a plurality of sensors and plurality of targets;

Figure 2 illustrates schematically an outline of steps that can be executed to generate an estimate of targets states;

Figure 3 illustrates in more detail steps that can be executed, and

Figures 4A and 4B are graphical representations of example input and output data for the process.

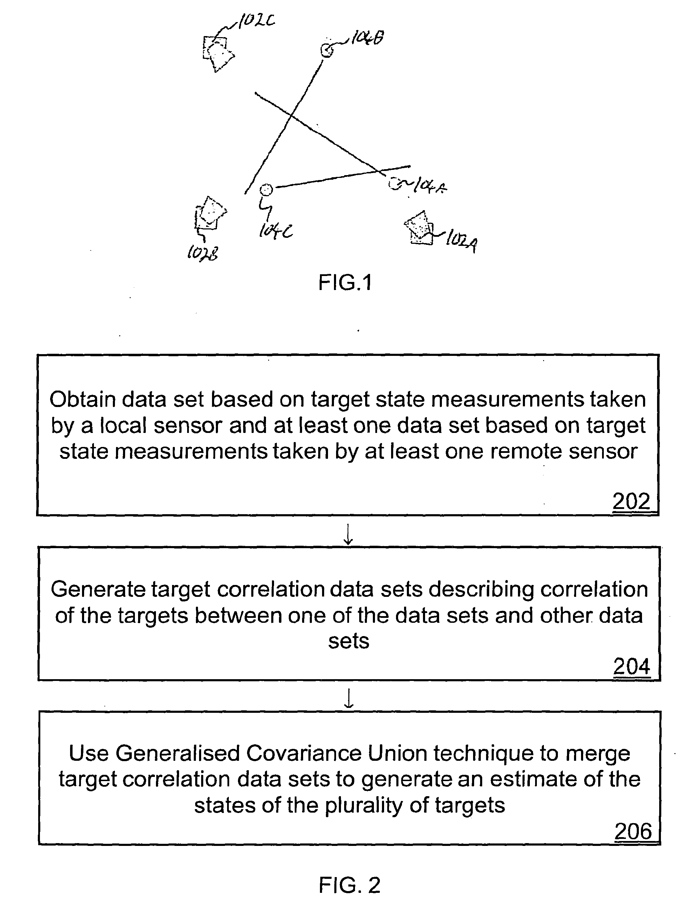

Referring to Figure 1, three sensors 102A - 102C are shown in an environment in which there are three moving targets 104A - 104C. It will be appreciated that the Figure is exemplary only and the system can operate with any number of sensors and any reasonable number of targets. An example of a sensor that could be used is AXIS 214 PTZ Camera used in CCTV systems. In the example the targets are moving (along the direction indicated by the respective arrows), whilst the sensors are essentially static. In other situations the sensor may be mounted on a vehicle, e.g an autonomous land, air or water-based vehicle.

Figure 2 outlines steps performed by a processor that is in communication with one of the sensors 102A - 102C. The processor may be integral with the sensor, or it may be remote. In embodiments of the system, one or more of the network nodes may be configured as special ones that can provide functions that differ from those of conventional DDF nodes, such as changing data correlations/associations and allocating network-wide track numbers. The special nodes may transmit the DDF picture they have generated, whereas normal DDF nodes transmit only own their own sensor's data. Embodiments of the process described herein can run on multiple sensor platforms as part of a distributed data fusion network. They can operate on sensor data, track data or a mix of sensor and track data, provided that such data is represented in a common mean/covariance format.

At step 202, data sets including information on states (e.g. a mean position estimate in three-dimensional space) of a plurality of targets is obtained by the processor, e.g. via wired/wireless communications links. The target state data sets can include data based on measurements taken by one or more sensor associated/integrated with the processor (the "local" sensor(s)) and data based on measurements taken by at least one other sensor in the network ("remote" sensor(s)). The sensors can be nodes in distributed data fusion network and the measurements may be processed (called "tracks").

Each measurement is correlated with at least one value indicating the expected reliability of the target state information. These reliability values may be obtained by physical models/records of faulty data processes, or by other means. The measurement data will be expressed in standard form, e.g. for each target measured, a mean position estimate and an estimation error covariance matrix transformed to the same coordinate frame. In the example, there is a lower bound reliability value and an upper bound reliability value associated with each target state measurement/ estimate.

In the example below, a local fusion node contains fused track estimates for three targets and receives target state estimates for four targets from a remote sensor (1):

*Remote sensor tracks: $S_1^{(1)}, S_2^{(1)}, S_3^{(1)}, S_4^{(1)}$    reliability:    $P_l^{(1)}, P_u^{(1)}$*

*Local fused tracks: $F_1, F_2, F_3$                reliability:    $P_l^f P_u^f$*

At step 204 the processor generates target correlation data sets describing correlation of the targets between one of the data sets and the other data sets. The local and remote sensor data sets provide "pictures" that indicate the states of the targets and part of the present process aims to recognise if a target recorded in one state data set corresponds with a target recorded in another data set. For instance, the process seeks to match one of the targets from the data based on the local sensor with a target in data based on the measurements taken by the remote sensor. Unique target references may be assigned to the targets in order to help achieve this.

A "soft" data correlation technique is used, i.e. one that provides more than one "best guess" at which target in one data set matches one of the targets in another target state data set. In the example, the known Murty algorithm (described in, for example, M.L. Miller, H.S. Stone and I.J. Cox, "Optimizing Murty's ranked assignment method", IEEE Trans. Aerospace and Electronic Systems, Vol. 33, No. 3, ppo.851 - 862, 1997) is used, with the N element of the algorithm that represents the number of "best guesses" being set at an arbitrary small value ($\geq$1). Alternatively, N may be determined from data, e.g. by thresholding the Murty score profile across candidate assignments. The skilled person will understand that alternative soft data association techniques, e.g. a multi-hypothesis tracker algorithm, could be utilised.

A value indicating the probability of the association being correct is also provided. As it is not known how to estimate the reliability of a Murty assignment (even for N=1, in which case Murty $\equiv$ Munkres), a least informative (0, 1) probability bound is set for each candidate association. The result of executing the Murty algorithm with N = 2 on the example data sets can be denoted as the following ordered set of candidate pairings:

*$\{F_1, S_1^{(1)}\} \{F_2, S_2^{(1)}\}$    assignment probability $P_{A,1}$*

*$\{F_1, S_3^{(1)}\}, \{F_2, S_2^{(1)}\}$    assignment probability $P_{A,2}$,*

*where A, 1 is the top-scoring assignment and A, 2 is the second top-scoring assignment.*

The data constituting each pair returned by the Murty algorithm is only partly reliable due to possible faults in the data generation process or system. Specifically, its probability of being reliable is only known to lie within a lower and upper bound. At step 206, the partially-reliable target associations generated by the Murty algorithm above are combined/merged using a process that involves the known Generalised Covariance Union (GCU) algorithm (see, for example, J.K. Uhlmann, "Covariance consistency methods for fault-tolerant distributed data fusion," Information Fusion, vol. 4, pp. 201-215, 2003 and S. Reece and S. Roberts, "Generalised covariance union and uncertain time measurement fusion," IEEE Trans. Aerospace and Electronic Systems, submitted, 2007). A brief illustration of the GCU algorithm will now be given for assisting with understanding. The table below describes fused estimates prior to GCU combination for two track fusion nodes labelled 1 and 2. The estimate of node i includes the state value $x_i$, precision $P_i^{-1}$ and confidence interval $[l_i, u_i]$. The estimates of both nodes are augmented with respective zero precision consistent estimate $y^\wedge$.

The $\otimes$ symbol in the table denotes a fusion operation. It will be assumed that the estimates are statistically independent and can be fused using a standard Kalman filter.

| Pairs | Precision | Confidence Interval |
|---|---|---|
| $x\hat{}_1 \otimes x\hat{}_2$ | $P_1^{-1} + P_2^{-1}$ | $[l_1 l_2, u_1 u_2]$ |
| $x\hat{}_1 \otimes y\hat{}_2$ | $P_1^{-1}$ | $[l_1(1-u_2), u_1(1-l_2))$ |
| $y\hat{}_1 \otimes x\hat{}_2$ | $P_2^{-1}$ | $[(1-u_1)(1-l_2), (1-l_1)u_2]$ |
| $y\hat{}_1 \otimes y\hat{}_2$ | $0$ | $[(1-u_1)(1-u_2), (1-l_2)(1-l_2)]$ |

The combined estimate below is determined using GCU:

$$x\hat{} = GCU(\{x\hat{}_1 \otimes x\hat{}_2, x\hat{}_1 \otimes y\hat{}_2, y\hat{}_1 \otimes x\hat{}_2\})$$

By omitting $y\hat{}_1 \otimes y\hat{}_2$, $x\hat{}$ has a finite covariance matrix. When both estimates, $x\hat{}_1$ and $y\hat{}_2$, are completely reliable then $l_1 = u_1 = l_2 = u_2 = 1$ and the output of the above algorithm is identical to the Kalman filter estimate $x\hat{}_1 \otimes x\hat{}_2$ as required. When there is no confidence in any of the input estimates then $l_1 = 0$ and $u_1 = 1$ for all nodes $i$ and the above algorithm reduces to known Covariance Union (CU) as required.

To illustrate, the following example demonstrates the steps in the general fusion algorithm for the integration of a pair of estimates. These estimates are:

$$\hat{x}_1 = [-1, 0], \quad P_1 = \begin{pmatrix} 1 & 0.5 \\ 0.5 & 1 \end{pmatrix}, \qquad p_1 \in [0.2, 0.4],$$

$$\hat{x}_2 = [1, 0], \quad P_2 = \begin{pmatrix} 1 & -0.5 \\ -0.5 & 1 \end{pmatrix}, \quad p_2 \in [0.6, 0.8]$$

Four new estimates are created by fusing the input estimates and the auxiliary estimates using the Kalman filter yielding the following estimates with corresponding covariance matrices and confidence intervals:

| Pairs | Precision | Confidence Interval |
|---|---|---|
| $x_1 \otimes x_2$ | $P_1^{-1} + P_2^{-1}$ | [0.12, 0.32] |
| $x_1 \otimes y_2$ | $P_1^{-1}$ | [0.04, 0.16] |
| $y_1 \otimes x_2$ | $P_2^{-1}$ | [0.36, 0.64] |
| $y_1 \otimes y_2$ | $0$ | [0.12, 0.32] |

Finally, the three estimates (excluding the zero precision estimate $y\hat{}_1 \otimes y\hat{}_2$) are combined using GCU. The confidence interval assigned to the GCU combined estimate is [0.8,1]. The combined estimate obtained using standard CU is considered to have zero precision.

Returning to the present embodiment, an intention is to combine/merge the target correlation data sets to generate a more accurate estimate of the states of the plurality of targets. Consider two estimates represented by the mean/covariance pairs (a, A) and (b, B). For example, (a, A) may be a local track estimate and (b, B) can be a remote track that another node has communicated to the processor. If these estimates are inconsistent with each other (i.e. do not gate) then something is clearly wrong, but there is no indication whether the fault lies with the local estimate or the remote estimate. One option would be to maintain separate hypotheses, but that option is usually inoperable because the hypotheses can quickly proliferate in a decentralised network and become very difficult to manage.

An alternative option used in the present embodiment is to merge the hypotheses into a single estimate. It is important that the merged estimate is statistically consistent, in the sense that its predicted uncertainty is not less than the actual uncertainty. The known Covariance Union (CU) algorithm guarantees consistency when the probabilities of the separate hypotheses are completely unknown. GCU relaxes this condition to incorporate known bounds on the probabilities. GCU approaches CU when the bounds are completely open and approaches Standard Mixture Reduction when the probabilities are exactly known. The algorithms can operate in batch or recursive mode and involve linear algebraic operations as well as a straightforward numerical optimisation step.

This merging/combining step can be denoted as follows for the example data:

$$F_{1,\,1}=g(F_1\otimes S_1^{(1)}, F_1, S_1^{(1)}),$$
$$F_{2,\,2}=g(F_2\otimes S_2^{(1)}, F_2, S_2^{(1)}),$$
$$F_{3,\,3}=g(F_3\otimes S_3^{(1)}, F_3, S_3^{(1)})$$

, $F_{2,\,2}$ and $F_{3,\,3}$ have the assignment probability $P_{A,\,1}$

$$F_{1,\,3}=g(F_1\otimes S_3^{(1)}, F_1, S_3^{(1)}),$$
$$F_{2,\,2}=g(F_2\otimes S_2^{(1)}, F_2, S_2^{(1)}),$$
$$F_{3,\,1}=g(F_3\otimes S_1^{(1)}, F_3, S_1^{(1)})$$

$F_{1,\,3}$, $F_{2,\,2}$ and $F_{3,\,1}$ have the assignment probability $P_{A,\,2}$

This step comprises a hybrid fusion-union algorithm for merging partially trusted estimates. The symbol $\otimes$ denotes the fusion part, whilst the function g denotes the union part (i.e. Generalised Covariance Union). The fusion part function can be selected from a set of available filter techniques. For example, the fusion function may comprise a Conservative Filter, e.g. Covariance Intersection, when it is known that there is correlation between the target estimation errors. Alternatively, the fusion function may comprise a standard data fusion algorithm/filter, e.g. Optimal Information or Kalman Filter, when it is known that there is no correlation with other data, i.e. the data is known to be statistically independent (e.g. it comprises measurements taken by the processor's own sensor). Thus, the result of this GCU operation is a set of GCU outputs corresponding to the N candidate pairings returned by the Murty algorithm.

The GCU step folds in the probability interval values $P_l^f$, $P_u^f$, $P_l^{(1)}$, $P_u^{(1)}$. The combined track pairs have a consistent though conservative covariance and associated reliability bounds.

The partially-reliable fused estimates generated are then combined so that multiple candidate solutions do not have to be stored in computer memory and/or transmitted over a constrained communications network. This merging/ combining step can be denoted as follows for the example data:

$$F_1 = g(F_{1,1}, F_{1,2}), \quad F_2 = g(F_{2,1}, F_{2,2}), \quad F_3 = g(F_{3,1}, F_{3,2})$$

This GCU operation folds in the assignment probabilities $P_{A,1}$ and $P_{A,2}$ and the operation is repeated for every target that has multiple candidate solutions. Any unpaired track taken by the remote sensor can be added to the fused track list: $F_4 = S_4^{(1)}$

In cases where there is more than one sensor associated/integrated with the processor then the above steps can be repeated for the further sensor/sensors' tracks. The estimates generated can be used to update the target states.

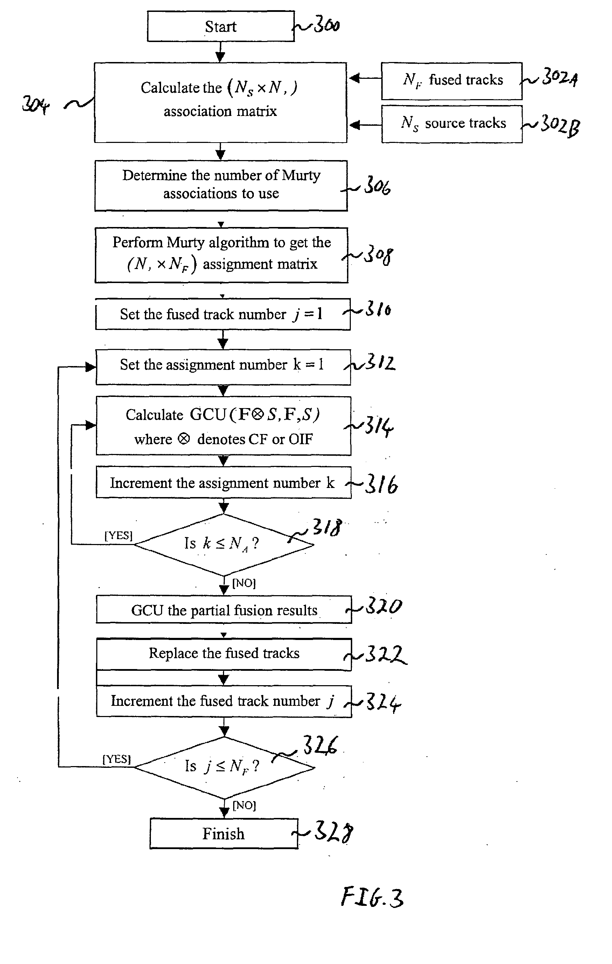

Figure 3 illustrates the process steps in more detail. The process begins at 300 and inputs comprising $N_F = 2$ fused target track data set(s) 302A and $N_S = 6$ target track data set(s) 302B are displayed. Each track can include state information for the target, e.g. position in 3D space (although other states such as velocity and angle may be used), as well as a value representing the uncertainty/reliability of the track.

At step 304 the ($N_S$ x $N_F$) correlation matrix is produced from the inputs. At step 306 the number of Murty Algorithm associations to be used is determined, as discussed above, and at step 308 the Murty Algorithm is applied to the association matrix to generate an assignment matrix ($N_A$ x $N_F$), which indicates which target in one of the input data sets may correspond to a target in one of the other input data sets.

At step 310 a variable j that represents the fused track number currently being processed is initialised to 1. At step 312 a variable k that represents the assignment number currently being processed is initialised to 1. At step 314 the result of the combining function GCU(F⊗S, F, S) is calculated. At step 316 the variable k is incremented and at step 318 a question is asked whether k is less than or equal to $N_A$. If the answer to that question is positive then control is passed back to step 314, otherwise step 320 is performed. At step 320 the GCU function is performed on the result of the calculation completed at step 314. Then, at step 322 the result of step 320 is used to update the target state estimate.

At step 324 the variable j is incremented and at step 326 a question is asked whether j is less than or equal to $N_F$. If the answer to that question is positive then control passed back to step 312, otherwise the process ends at step 328.

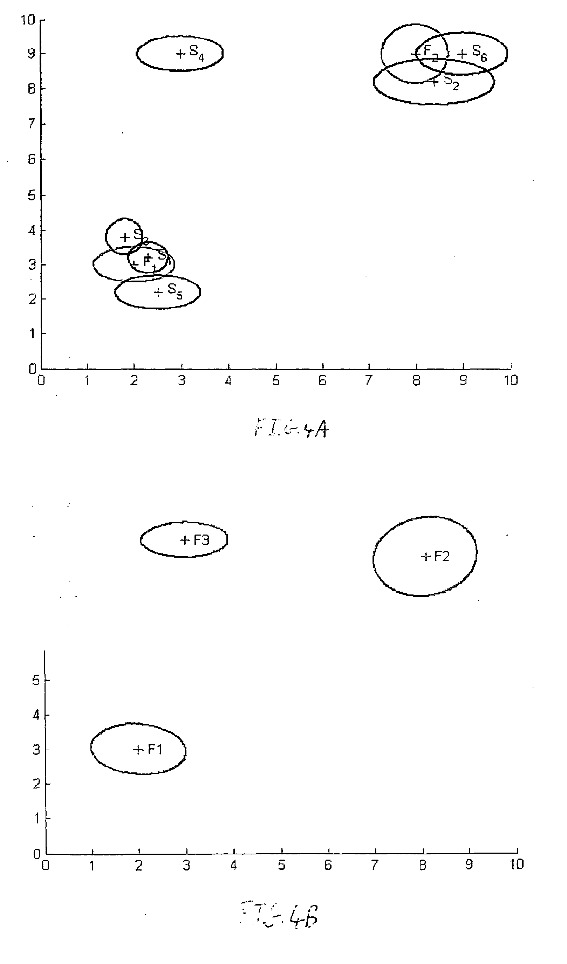

A graphical representation of other example measurement data/tracks used as the input for the process is shown in Figure 4A. A distributed fusion node in a network maintains two track estimates F1 and F2. The node is then presented with a new set of data S1 - S6 from other nodes. The elements of this new data are only partially reliable. The track estimates and data are represented in Figure 4A as mean 2D position values (the + symbol) at the centre of associated error covariance ellipses.

A graphical representation of the result of applying the process to the input of Figure 4A is shown in Figure 4B. The track estimates F1 and F2 have been updated with the new data and a new track estimate F3 has been generated. All of these estimates, though somewhat conservative, are statistically consistent.

**Claims**

1. A method of estimating states of a plurality of targets tracked by a plurality of sensors, the method including:

   obtaining (202) a plurality of data sets based on measurements taken by a plurality of sensors, each said data set including information on states of a plurality of targets;
   generating (204) a plurality of target correlation data sets describing correlation of the targets within a first said data set and at least one other said data set, and
   using a Generalised Covariance Union (GCU) technique to merge (206) at least some of the plurality of target correlation data sets to generate an estimate of the states of the plurality of targets.

2. A method according to claim 1, wherein the step of obtaining (202) a plurality of data sets includes obtaining a first data set (302B) based on target state measurements taken by a local sensor and at least one data set (302A) based on target state measurements taken by at least one remote sensor.

3. A method according to claim 2, further including obtaining a value denoting a reliability of the target state information within a said data set.

4. A method according to any one of the preceding claims, wherein the correlation data sets are generated (204) using a Murty algorithm.

5. A method according to claim 4, wherein the correlation data sets include a representation of a probability of a target tracked within a first said data set (e.g. a local sensor) corresponding to a target tracked within a second said data set (e.g. a remote sensor).

6. A method according to claim 5, including executing a GCU algorithm with arguments based on a fusion of the first data set and the second data set, the first data set, the second data set, and associated reliability values for each said argument.

7. A method according to claim 6, wherein the fusion of the first data set and the second data set involves an algorithm selected from a set including: Kalman Filter, Conservative Filter, Optimal Information Filter.

8. A method according to claim 6 or 7, wherein the step of using a Generalised Covariance Union technique to merge said plurality of target correlation data sets to generate an estimate of the states of the plurality of targets includes performing a GCU algorithm with arguments based on a result of the performance of the GCU algorithm on the fusion of the first data set and the second data set, the first data set and the second data set.

9. A method according to any one of the preceding claims, further including using the estimate of the states of the plurality of targets to update target state estimates in a DDF algorithm.

10. A method according to any one of the preceding claims, wherein the correlation data comprises a plurality of pairings of said data sets, and the step of using the GCU technique comprises:

    performing a fusion operation (314) on each said pairing, and
    applying a GCU algorithm (314) to inputs comprising a result of each said fusion operation and corresponding said data sets in each said pairing.

11. A method according to claim 10, further including applying a further GCU algorithm (320) to inputs comprising outputs of the firstmentioned GCU algorithm to produce a single estimate.

12. A sensor (102) configured to estimate states of a plurality of targets (104) tracked by a plurality of sensors, the sensor including:

an input device configured to obtain a plurality of data sets based on measurements taken by a plurality of sensors, each said data set including information on states of a plurality of targets;

a data correlation device for generating a plurality of target correlation data sets describing correlation of the targets within a first said data set and at least one other said data set, and

a merging device that uses a Generalised Covariance Union (GCU) technique to merge at least some of the plurality of target correlation data sets to generate an estimate of the states of the plurality of targets.

13. A computer program product comprising computer readable medium, having thereon computer program code means, when the program code is loaded, to make the computer execute a method of estimating states of a plurality of targets tracked by a plurality of sensors, the method including:

obtaining (202) a plurality of data sets based on measurements taken by a plurality of sensors, each said data set including information on states of a plurality of targets;

generating (204) a plurality of target correlation data sets describing correlation of the targets within a first said data set and at least one other said data set, and

using a Generalised Covariance Union (GCU) technique to merge (206) at least some of the plurality of target correlation data sets to generate an estimate of the states of the plurality of targets.

FIG.1

Obtain data set based on target state measurements taken by a local sensor and at least one data set based on target state measurements taken by at least one remote sensor

202

↓

Generate target correlation data sets describing correlation of the targets between one of the data sets and other data sets

204

↓

Use Generalised Covariance Union technique to merge target correlation data sets to generate an estimate of the states of the plurality of targets

206

FIG. 2

Start ~300

Calculate the $(N_S \times N_r)$ association matrix ~304

$N_F$ fused tracks ~302A

$N_S$ source tracks ~302B

Determine the number of Murty associations to use ~306

Perform Murty algorithm to get the $(N_r \times N_F)$ assignment matrix ~308

Set the fused track number $j = 1$ ~310

Set the assignment number k = 1 ~312

Calculate $GCU(F \otimes S, F, S)$ where $\otimes$ denotes CF or OIF ~314

Increment the assignment number k ~316

[YES] Is $k \leq N_A$? ~318

[NO]

GCU the partial fusion results ~320

Replace the fused tracks ~322

Increment the fused track number $j$ ~324

[YES] Is $j \leq N_F$? ~326

[NO]

Finish ~328

FIG. 3

FIG. 4A

FIG. 4B

Europäisches
Patentamt

European
Patent Office

Office européen
des brevets

# EUROPEAN SEARCH REPORT

Application Number

EP 08 25 2580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/204382 A1 (JULIER SIMON JUSTIN [US] ET AL) 30 October 2003 (2003-10-30) * abstract; figure 3 * * paragraph [0003] - paragraph [0075] * * paragraph [0134] * * paragraph [0190] * * paragraph [0255] - paragraph [0259] * * paragraph [0277] - paragraph [0279] * * paragraph [0351] * ----- | 1-7,9, 11-13 | INV. G06K9/62 G01S13/72 |
| D,Y | UHLMANN J K: "Covariance consistency methods for fault-tolerant distributed data fusion" INFORMATION FUSION ELSEVIER USA, vol. 4, no. 3, September 2003 (2003-09), pages 201-215, XP002527515 ISSN: 1566-2535 * the whole document * ----- | 1-7,9, 11-13 | |
| A | ROGERS A ET AL: "Computational Mechanism Design for Information Fusion within Sensor Networks" 2006 9TH INTERNATIONAL CONFERENCE ON INFORMATION FUSION, FUSION - 2006 9TH INTERNATIONAL CONFERENCE ON INFORMATION FUSION, FUSION 2006 INST. OF ELEC. AND ELEC. ENG. COMPUTER SOCIETY US, IEEE, PISCATAWAY, NJ, USA, 1 July 2006 (2006-07-01), pages 1-7, XP031042507 ISBN: 978-1-4244-0953-2 * abstract; figure 2 * * page 1, right-hand column, paragraph 4 - page 3, left-hand column, paragraph 2 * * page 3, right-hand column, paragraph 3 - page 4, left-hand column * ----- -/-- | 1-13 | TECHNICAL FIELDS SEARCHED (IPC) G06K G06F G01S |

The present search report has been drawn up for all claims

| Place of search | Date of completion of the search | Examiner |
|---|---|---|
| Munich | 12 May 2009 | Müller, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 08 25 2580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BLACKMAN S S: "Multiple hypothesis tracking for multiple target tracking" IEEE AEROSPACE AND ELECTRONIC SYSTEMS MAGAZINE, IEEE SERVICE CENTER, PISCATAWAY, NJ, US, vol. 19, no. 1, 1 January 2004 (2004-01-01), pages 5-18, XP011106326 ISSN: 0885-8985 * page 10, left-hand column, paragraph 2 * | 4 | |
| A | JULIER S J ET AL: "Fusion of time delayed measurements with uncertain time delays" AMERICAN CONTROL CONFERENCE, 2005. PROCEEDINGS OF THE 2005 PORTLAND, OR, USA JUNE 8-10, 2005, PISCATAWAY, NJ, USA,IEEE, 8 June 2005 (2005-06-08), pages 4028-4033, XP010820428 ISBN: 978-0-7803-9098-0 * the whole document * | 1-13 | |
| A | OTTMAR BOCHARDT ET AL: "Generalized Information Representation and Compression Using Covariance Union" 2006 9TH INTERNATIONAL CONFERENCE ON INFORMATION FUSION, FUSION - 2006 9TH INTERNATIONAL CONFERENCE ON INFORMATION FUSION, FUSION 2006 INST. OF ELEC. AND ELEC. ENG. COMPUTER SOCIETY US, IEEE, PISCATAWAY, NJ, USA, 1 July 2006 (2006-07-01), pages 1-7, XP031042514 ISBN: 978-1-4244-0953-2 * the whole document * | 1-13 | TECHNICAL FIELDS SEARCHED (IPC) |

The present search report has been drawn up for all claims

| Place of search | Date of completion of the search | Examiner |
|---|---|---|
| Munich | 12 May 2009 | Müller, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 25 2580

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2009

| Patent document cited in search report | Publication date | Patent family member(s) | Publication date |
|---|---|---|---|
| US 2003204382 A1 | 30-10-2003 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. Manyika ; H.F. Durrant-Whyte.** Data Fusion and Sensor Management: A Decentralised Information-Theoretic Approach. Ellis Horwood, 1994
- Generalised Decentralised Data Fusion with Covariance Intersection. **S.J. Julier ; J.K. Uhlmann.** Handbook of Data Fusion. CRC Press, 2001
- **M.L. Miller ; H.S. Stone ; I.J. Cox.** Optimizing Murty's ranked assignment method. *IEEE Trans. Aerospace and Electronic Systems,* 1997, vol. 33 (3), 851-862

- **J.K. Uhlmann.** Covariance consistency methods for fault-tolerant distributed data fusion. *Information Fusion,* 2003, vol. 4, 201-215
- **S. Reece ; S. Roberts.** Generalised covariance union and uncertain time measurement fusion. *IEEE Trans. Aerospace and Electronic Systems,* 2007